# EUROPEAN PATENT SPECIFICATION

(11) **EP 2 318 750 B1**
(45) Date of publication and mention of the grant of the patent: **21.12.2011**
(21) Application number: 09782268.8
(22) Date of filing: 27.08.2009
(51) Int. Cl.: F16M 11/00, B29C 65/08

(54) **A DISPLAY DEVICE**
ANZEIGEEINRICHTUNG
DISPOSITIF D AFFICHAGE

(30) Priority: 01.09.2008 TR 200806555
(43) Date of publication of application: 11.05.2011
(73) Proprietor: Arçelik Anonim Sirketi, 34950 Istanbul (TR)
(72) Inventor: GURSES, Aylin, 34950 Istanbul (TR); AVCI, Serdal Korkut, 34950 Istanbul (TR); GULER, Cemal, 34950 Istanbul (TR); CELIKKOL, Ulku, 34950 Istanbul (TR); FERADOGLU, Alev, 34950 Istanbul (TR)
(86) International application number: PCT/EP2009/061059
(87) International publication number: WO 2010/023241

(56) References cited:
- JP-A- 4 191 036
- JP-A- 11 284 359
- JP-A- 2007 136 834
- US-A1- 2002 140 875
- US-A1- 2006 087 596

## Description

**Field of the Invention**

The present invention relates to a display device comprising a plastic stand with an enhanced durability.

**Prior Art**

As the display devices have increasingly acquired a compact form, the stand which enables the device to be upright and in balance has become an important part of the design. The stands should occupy a small place as well as being rigid. The display device stands are in the form of bases on which the devices are disposed. In the state of the art, stands are generally produced from plastic based materials in order to provide an aesthetical appearance with low cost. However since plastic alone is inadequate in carrying loads and providing rigidity, metal pieces are used in current applications within the plastic structures for increasing rigidity of the stand and preventing it from bending and twisting.

The United States patent document US2005152103, an application within the state of the art, describes a base mounted onto the body of the device. In the display device wherein a detachably coupled metal plate is used along with the stand, the metal plate is fixed to the stand via a screw.
Other examples are shown in US 2002/0140875 and US 2006/0087596.

The Taiwanese patent document TW241848B, an application within the state of the art, discloses a metal part which enables the panel to be supported on the stand and which is mounted between the stand and the panel via screws.
The United States patent document US 6 545 948, an application within the state of the art, describes a waterproof protective box for loudspeakers. The body lower surface and the base connection part of the box are coupled to the each other via ultrasonic welding.

In the device stand applications within the state of the art, a metal part is used within the stand or in between the stand and the device body. Screws are used for mounting these parts which are used for enhancing rigidity. Thus, due to use of additional metal, production time and cost also increase in addition to the weight of the device. Where ultrasonic welding is used, welding is generally performed only at certain points. In this case, it is not possible to construct rigid and balanced stands suitable for carrying the device.

**Summary of the Invention**

The objective of the present invention is to provide a display device comprising a stand with no metal parts.

Another objective of the invention is to provide a display device with decreased production time and cost.

The display device developed to fulfill the objective of the present invention and defined in Claim 1 and its dependent claims, has a stand comprised of two plastic parts. The said plastic parts constitute the lower and upper surfaces of the stand, and these parts are coupled via ultrasonic welding. On the surfaces of the lower and upper parts facing each other, there are provided welding lines formed so as to fit onto each other. In one embodiment of the invention, one of the welding lines is in the form of a protrusion extending along the line, while the other is in the form of a recess extending along the line, and in both of the parts, section of the welding lines is the same along the line. Upon inserting the parts that are in the form of a protrusion and a recess into one another along the said lines, the parts are vibrated under high frequency. The protrusion and recess shaped welding lines are coupled to each other upon partially melting down and then they are cooled whereby welding is completed. Due to the fact that welding is not performed on a point but along lines spread on the entire lower and upper part areas, upon coupling of the lower and upper parts, a rigid and balanced plastic stand is obtained which is suitable for carrying loads. In order to obtain a balanced plastic stand with high carrying capacity, the welding lines are formed so as to enable balanced distribution of the load acting on them. Accordingly, the welding lines are comprised of closed geometrical forms (G) at the center of the stand area, and beam-like linear lines (D, U) extending from these forms towards the edges of the stand area. With this method, there remains no need for using a metal part or an additional connection part in the device stand produced from two plastic pieces. Thus, a lightweight stand with high rigidity and resistance and reduced production time and cost, and a display device having such stand are obtained.

**Detailed Description of the Invention**

The display device and stand developed to fulfill the objective of the present invention is illustrated in the accompanying figures wherein,

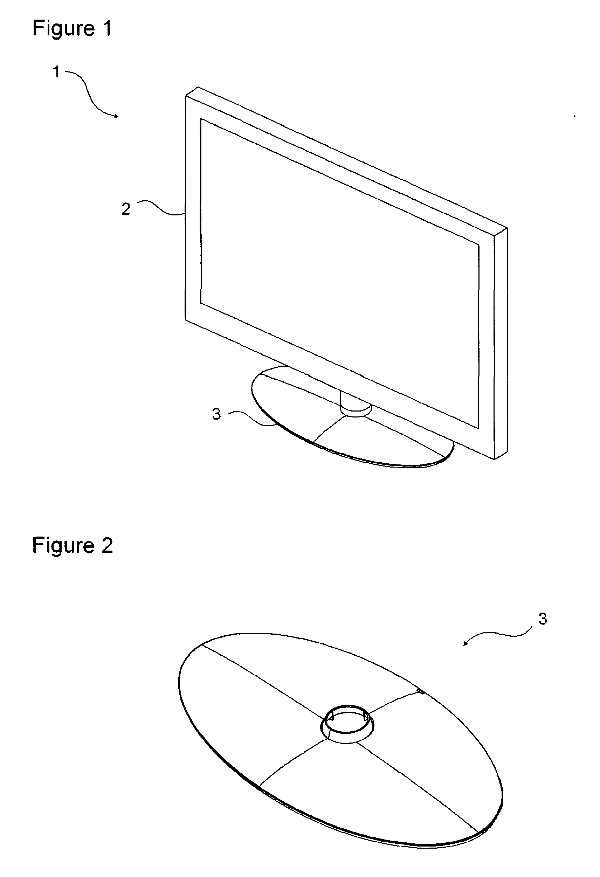

Figure 1 is the perspective view of the inventive display device.

Figure 2 is the top view of the stand.

Figure 3 is the bottom view of the upper part and upper part welding lines.

Figure 4 is the top view of the lower part and lower part welding lines.

Figure 5 is the sectional view of the lower and upper part welding lines.

The components shown in the figures are numbered individually, where the numbers refer to the following:
1. Device
2. Body
3. Stand
4. Upper part
5. Lower part

40, 50 Welding line

The inventive display device (1) comprises a body (2) and a stand (3).

### (Figure-1)

The body (2) is comprised of the electronic parts, screen and casing of the device (1). The body (2) is disposed on the stand (3) produced from a plastic material.

The stand is a flat and rigid base which does not slip away from the surface that it is disposed on, and it enables to keep the device upright and in balance (Figure (2)) The stand (3) carrying the body (2) comprises an upper part (4) and a lower part (5). The upper part (4) and the lower part (5) are of the same size. The lower part (5) is located at the lower part of the stand (3) and contacts the surface on which the device (1) is arranged. When coupled with the lower part (5), the upper part (4) completely covers the lower part (5) and forms the external appearance of the stand (3).

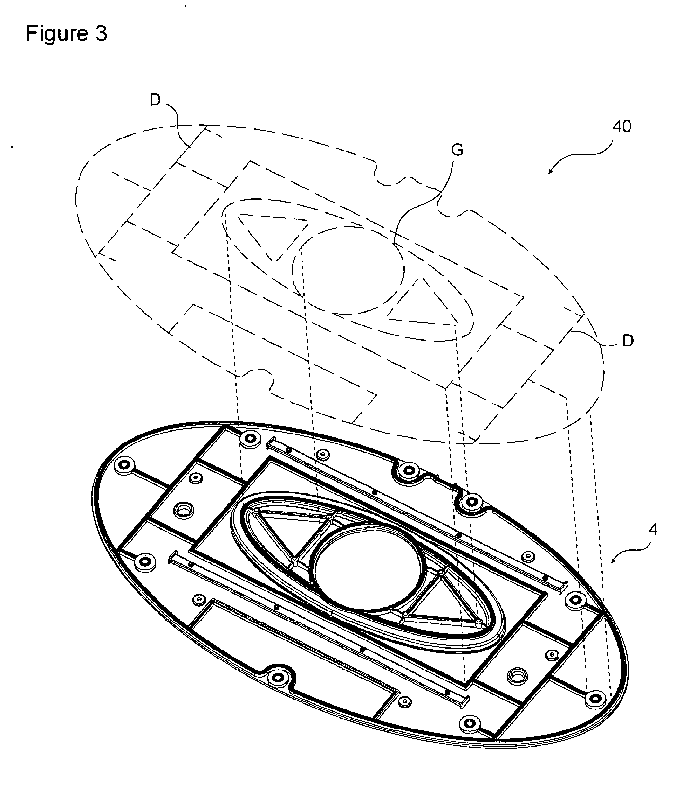

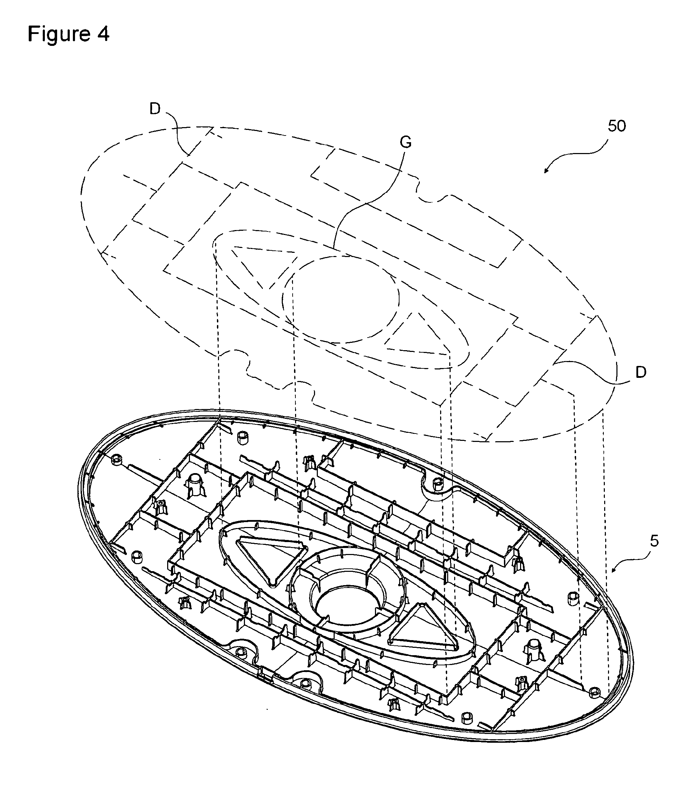

In one embodiment of the invention, the upper part (4) and the lower part (5) are coupled via ultrasonic welding. Ultrasonic welding is melting two plastic parts by having them rub against each other (vibrating one of the parts at high frequency) until reaching the melting point, and then having them cooled. The upper part (4) and the lower part (5) are not welded to each other at specific points, but along the lines (40, 50) formed in advance on the surfaces of the parts (4, 5) facing each other. (Figure 3, Figure 4) The welding lines (40, 50) on both of the parts (4, 5) are of the same geometry and completely fit onto each other. The welding lines (40, 50) extend along lines that are spread out on the entire upper and lower parts (4, 5). Thanks to the fact that the welding lines (40, 50) extend as a plurality of lines on the entire stand area, weight of the device (1) is distributed along the long welding lines. Thus, as a result of welding of the lower part (5) and the upper part (4) to each other, the stand (3) acquires the form of a closed box with high rigidity and resistance, whereby a plastic stand (3) is obtained which is capable of carrying the device (1) in balance.

The welding lines (40, 50) comprise nested circular, elliptical or rectangular closed geometrical forms (G) preferably around the center of the stand (3) area, and beam-like lines (D) which intersect the edges bordering the stand (3) area. Accordingly the overall structure of the welding lines (40, 50) is comprised of the closed forms (G) located in the center and the linear lines (D) extending towards the edges of the stand (3) area. (Figure 3, Figure 4). The welding lines (40, 50) further comprise short extensions (U) which intersect these lines (D) and which also connect the closed forms (G) around the center with the lines (D).

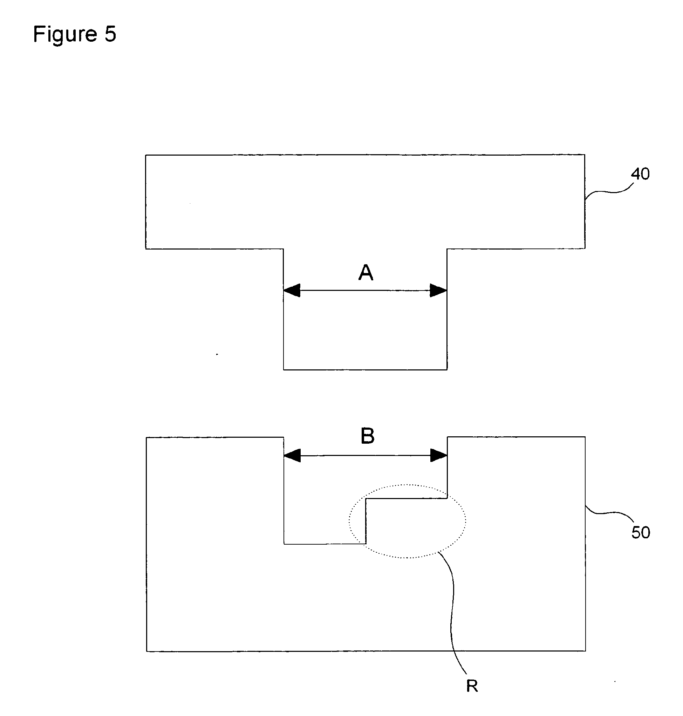

In the upper part (4) and lower part (5), section of the welding line where the ultrasonic welding is carried out is the same at any point. In the preferred embodiment of the invention, the upper part (4) welding lines (40) are in the form of a protrusion extending along the line, while the lower part (5) welding lines (50) are in the form of a recess extending along the line. Accordingly, upon fitting lower part (5) and upper part (4) welding lines (40, 50) on one another, the upper part (4) welding line (40: protrusion) is inserted into the lower part (5) welding line (50: recess) and the welding process is performed at one go along all the lines. In order to facilitate insertion of the welding lines (40, 50) into each other, the thickness (A) of the protrusion at the welding line (40) of the upper part (4) is less than the width (B) of the recess (50) at the welding line of the lower part (5). (Figure 5) In this case, in order to provide sufficient friction surface after the two parts (4, 5) are inserted into each other, a step (R) is formed at the lower part (5) welding line (50) (within its recess). This way, when the upper part (4) is being vibrated during ultrasonic welding, the protrusion rubs against the step R of the recess. As the temperature rises as a result of the friction, a part of the upper part (4) welding line (40) and a part of the step (R) at the lower part (5) welding line (50) melt down. The molten parts fill in the gap between the protrusion and recess and upon carrying out the cooling process, ultrasonic welding is completed. Upon coupling of the upper part (4) and the lower part (5) produced from plastic, as a result of the welding, a stand (3) is obtained which forms a closed volume with high rigidity.

Within the scope of this basic concept, it is possible to develop a wide variety of embodiments of the inventive protective stand (3). The invention is according to the claims and cannot be limited to the examples described herein.

## Claims

1. A display device (1) comprising a body (2) comprised of electronic parts, a screen and a casing, and a stand (3) carrying the body (2); whereby the stand (3), is formed by coupling of a plastic upper part (4) and a plastic lower part (5) via ultrasonic welding, wherein the stand (3) comprises welding lines (40, 50) on the surfaces of the upper part (4) and the lower part (5) facing each other, which welding lines correspond to each other when the parts (4, 5) are positioned on top of each other and **characterised in that** the welding lines are spread on the stand (3) area, whereby the upper part (4) welding line (40) is in the form of a protrusion, while the lower part (5) welding line (50) is in the form of a recess into which the said protrusion can be inserted, or whereby the upper part (4) welding line (40) is in the form of a recess, while the lower part (5) welding line (50) is in the form of a protrusion which can be inserted into the said recess.

2. A display device (1) according to Claim 1 , **characterized by** welding lines (40, 50) which comprise nested circular, elliptical or rectangular closed forms (G) around the center of the stand (3) area, and beam-like lines (D) intersecting the edges bordering the stand (3) area.

3. A display device (1) according to Claim 2, **characterized by** welding lines (40, 50) comprising short extensions (U) which intersect the lines (D) and which also connect the closed forms (G) around the center with the lines (D).

4. A display device (1) according to Claim 2 and 3, **characterized by** a stand (3) comprising an upper part (4) which has a welding line (40) whose section is the same at any point.

5. A display device (1) according to Claim 2 or 4, **characterized by** a stand (3) comprising a lower part (5) which has a welding line (50) whose section is the same

6. A display device (1) according to any of the above Claims, **characterized by** a stand (3) wherein thickness (A) of the protrusion is narrower than the width of the recess (B).

7. A display device (1) according to any of the above claims, **characterized by** a stand (3) comprising a step (R) which is formed within the recess to increase the friction surface for ultrasonic welding.

## Patentansprüche

1. Anzeigevorrichtung (1), umfassend einen Körper (2) aus elektronischen Bauteilen, einem Bildschirm und einem Gehäuse, und einen Ständer (3), der den Körper (2) trägt, wobei der Ständer (3) ausgebildet ist, indem ein oberes Kunststoffteil (4) und unteres Kunststoffteil (5) mittels Ultraschallschweißen aneinander gekoppelt sind, wobei der Ständer (3) Schweißnähte (40, 50) an der Oberfläche des oberen Teils (4) und des unteren Teils (5) umfasst, die einander zugewandt sind, wobei die Schweißnähte miteinander übereinstimmen, wenn die Teile (4, 5) aufeinander positioniert sind, und **dadurch gekennzeichnet, dass** die Schweißnähte auf der Fläche des Ständers (3) verteilt sind,
wobei die Schweißnaht (40) des oberen Teils (4) die Form eines Vorsprungs aufweist, während die Schweißnaht (50) des unteren Teils (5) die Form einer Vertiefung aufweist, in die der Vorsprung eingesetzt werden kann, oder
wobei die Schweißnaht (40) des oberen Teils (4) die Form einer Vertiefung aufweist, während die Schweißnaht (50) des unteren Teils (5) die Form eines Vorsprungs aufweist, der in die Vertiefung eingesetzt werden kann.

2. Anzeigevorrichtung (1) nach Anspruch 1, **gekennzeichnet durch** Schweißnähte (40, 50), die geschachtelte kreisförmige, elliptische oder rechteckige geschlossene Formen (G) um die Mitte der Fläche des Ständers (3) umfassen, und strebenartige Linien (D), die die Kanten schneiden, die an die Fläche des Ständers (3) angrenzen.

3. Anzeigevorrichtung (1) nach Anspruch 2, **gekennzeichnet durch** Schweißnähte (40, 50), die kurze Verlängerungen (U) umfassen, die die Linien (D) schneiden und die außerdem die geschlossenen Formen (G) um die Mitte mit den Linien (D) verbinden.

4. Anzeigevorrichtung (1) nach Anspruch 2 und 3, **gekennzeichnet durch** einen Ständer (3), der ein oberes Teil (4) umfasst, das eine Schweißnaht (40) aufweist, deren Querschnitt an jeder Stelle gleich ist.

5. Anzeigevorrichtung (1) nach Anspruch 2 oder 4, **gekennzeichnet durch** einen Ständer (3), der ein unteres Teil (5) umfasst, das eine Schweißnaht (50) aufweist, deren Querschnitt an jeder Stelle gleich ist.

6. Anzeigevorrichtung (1) nach einem der vorangehenden Ansprüche, **gekennzeichnet durch** einen Ständer (3), wobei die Dicke (A) des Vorsprungs geringer ist als die Breite der Vertiefung (B).

7. Anzeigevorrichtung (1) nach einem der vorangehenden Ansprüche, **gekennzeichnet durch** einen Ständer (3), der eine Stufe (R) umfasst, die in der Vertiefung ausgebildet ist, um die Reibungsfläche für das Ultraschallschweißen zu erhöhen.

## Revendications

1. Un dispositif d'affichage (1) comprenant un corps (2) composé de pièces électroniques, un écran et un boîtier, et un pied (3) portant le corps (2); où le pied (3) est formé par le couplage d'une pièce supérieure en plastique (4) et une pièce inférieure en plastique (5) par le soudage par ultrasons, où le pied (3) comprend des lignes de soudure (40, 50) sur les surfaces de la pièce supérieure (4) et la pièce inférieure (5) face à face, où les lignes de soudure correspondent les uns aux autres lorsque les pièces (4, 5) sont positionnées l'une sur l'autre et **caractérisé en ce que** les lignes de soudure s'étendent sur la région du pied (3),
où la ligne de soudure (40) de la pièce supérieure (4) est en forme d'une protubérance, tandis que la ligne de soudure (50) de la pièce inférieure (5) est en forme d'un évidement dans lequel ladite protubérance peut être insérée, ou
où la ligne de soudure (40) de la pièce supérieure (4) est en forme d'un évidement, tandis que la ligne de soudure (50) de la pièce inférieure (5) est en forme d'une protubérance qui peut être insérée dans ledit évidement.

2. Un dispositif d'affichage (1) selon la Revendication 1, **caractérisé par** les lignes de soudure (40, 50) qui sont en circulaire imbriquée, elliptique ou rectangulaire forme fermée (G) autour de centre de la région du pied (3), et les lignes (D) en forme de faisceaux qui croisent les bords de la région du pied (3).

3. Un dispositif d'affichage (1) selon la Revendication 2, **caractérisé par** les lignes de soudure (40, 50) comprenant des extensions courtes (U) qui croisent les lignes (D) et qui également relient les formes fermées (G) autour du centre des lignes (D).

4. Un dispositif d'affichage (1) selon la Revendication 2 et 3, **caractérisé par** un pied (3) comprenant une pièce supérieure (4) qui a une ligne de soudure (40) dont la section est le même à tout point.

5. Un dispositif d'affichage (1) selon la Revendication 2 et 4, **caractérisé par** un pied (3) comprenant une pièce inférieure (5) qui a une ligne de soudure (50) dont la section est identique à tout point.

6. Un dispositif d'affichage (1) selon l'une quelconque des revendications précédentes, **caractérisé par** un pied (3) où l'épaisseur (A) de la protubérance est plus étroite que la largeur de l'évidement (B).

7. Un dispositif d'affichage (1) selon l'une quelconque des revendications précédentes, **caractérisé par** un pied (3) comprenant une marche (R) qui est formée dans l'évidement afin d'augmenter la surface de friction pour le soudage par ultrasons.
